# EUROPEAN PATENT SPECIFICATION

(11) **EP 4 060 983 B1**
(45) Date of publication and mention of the grant of the patent: **09.04.2025**
(21) Application number: 21153024.1
(22) Date of filing: 22.01.2021
(51) Int. Cl.: H04N 25/00, H04N 25/47, G06T 7/223

(54) **A METHOD FOR ACCUMULATING EVENTS USING AN EVENT-BASED VISION SENSOR AND OVERLAPPING TIME WINDOWS**
VERFAHREN ZUM AKKUMULIEREN VON EREIGNISSEN UNTER VERWENDUNG EINES EREIGNISBASIERTEN SICHTSENSORS UND ÜBERLAPPENDER ZEITFENSTER
PROCÉDÉ D'ACCUMULATION D'ÉVÉNEMENTS À L'AIDE D'UN CAPTEUR DE VISION BASÉ SUR DES ÉVÉNEMENTS ET DE FENÊTRES TEMPORELLES CHEVAUCHANTES

(43) Date of publication of application: 21.09.2022
(73) Proprietor: TOYOTA JIDOSHA KABUSHIKI KAISHA, Aichi-ken 471-8571 (JP); IniVation AG, 8050 Zürich (CH)
(72) Inventor: MEIER, Sven, 1140 Brussels (BE); OLMEDA REINO, Daniel, 1140 Brussels (BE); WAGLER, Lennart, 53125 Bonn (DE); TAVERNI, Gemma, 8050 Zürich (CH)
(74) Representative: Cabinet Beau de Loménie

(56) References cited:
- US-A1- 2017 213 105
- US-A1- 2020 219 267
- MIN LIU ET AL: "ABMOF: A Novel Optical Flow Algorithm for Dynamic Vision Sensors", ARXIV.ORG, CORNELL UNIVERSITY LIBRARY, 201 OLIN LIBRARY CORNELL UNIVERSITY ITHACA, NY 14853, 10 May 2018 (2018-05-10), XP080876865

## Description

### Field of the disclosure

The present disclosure is related to the field of event-based vision sensors and more precisely to the accumulation of events detected by these sensors.

### Description of the Related Art

An event-based vision sensor is a type of sensor which produces a nearly continuous stream of temporal brightness changes. Each event, or change event, corresponds to an increase or a decrease of brightness by at least a given value. These sensors may comprise a plurality of pixels arranged in a matrix configured to that in the stream, each event is associated with a time stamp, a pixel address (the position in the matrix), and a sign (typically embodied by a value indicating whether the brightness increases or decreases, -1 or +1 for example).

Interest in these sensors has grown as they benefit from a low latency, a high dynamic range, and a low power consumption for transferring, computing, and storing data. Also, the operation of these sensors automatically subtract backgrounds from observed scenes.

Using event-based vision sensors presents one major obstacle which prevents using conventional computer vision methods (i.e. feature engineering or deep learning due to the absence of frames). Several methods have been proposed in the prior art to obtain frames from a stream of events. Grouping events together to form a frame is usually called accumulating events into a frame, typically over a fixed duration or a fixed number of events.

Documents US 2017/213105 and US 2020/219267 both disclose a method to elaborate two image frames using an event sensor and two event buffers storing the events that occur in two overlapping time windows.

Documents "Adaptive time-slice block-matching optical flow algorithm for dynamic vision sensors (ABMOF)" (Min Liu and Tobi Delbruck, 2018) and WO 2018219931 disclose a method for computing optical flow using event-based sensors. In these documents, events are accumulated into three time slices frames which are rotated at a constant time interval or at a constant total event count, or whenever any sub-area of the first slice accumulates a specified number of events. These time slices frames are integrated into an image frame. The solution of these two documents is unsatisfactory as the integration is not continuous and rigid.

Document "Real-Time Intensity-Image Reconstruction for Event Cameras Using Manifold Regularisation" (Gottfried Munda, Christian Reinbacher, and Thomas Pock. International Journal of Computer Vision, 126(12):1381{1393, 2018.) discloses the use of an event manifold to formulate the intensity image reconstruction problem. The method for image reconstruction of this document integrates the intensity changes over time: adding a certain value c1 for positive events and subtracting a different intensity value c2 for negative events. The manifold tracks the time history of each pixel, in a similar manner to what is defined in "Event-based visual flow" (Ryad Benosman, Charles Clercq, Xavier Lagorce, Sio-Hoi Ieng, and Chiara Bartolozzi. IEEE transactions on neural networks and learning systems, 25 (2):407-417, 2013.) as the surface of active events. These solutions propose to estimate the optical flow by studying a surface gradient.

The method described in document "Simultaneous optical flow and intensity estimation from an event camera" (Patrick Bardow, Andrew J Davison, and Stefan Leutenegger. In Proceedings of the IEEE Conference on Computer Vision and Pattern Recognition, pages 884-892, 2016.) uses a sliding time window along the stream of events to solve an optimization problem for optical flow and reconstructed intensity value estimation. In this document, at each iteration, the optimization method minimizes a differential equation and computes intensity image value and optical flow. At the shifting time, all the pixels array values are initialized to either previous estimates or predictions.

Document "Continuous-time intensity estimation using event cameras" (Cedric Scheerlinck, Nick Barnes, and Robert Mahony. In Asian Conference on Computer Vision, pages 308-324. Springer, 2018) presents a method for intensity image estimation.

Document "Video Frame Interpolation via Adaptive Convolution" (Simon Niklaus, Long Mai, and Feng Liu. In Proceedings of the IEEE Conference on Computer Vision and Pattern Recognition, pages 670-679, 2017) discloses a method for intensity frame estimation (in the specific intra-frames interpolation) and motion estimation using two consecutive frames. This method is based on traditional images from frame-based cameras.

One of the main problems of processing the event stream output from event-based cameras with conventional computer vision methods (as feature engineering or deep learning) is the absence of frames. Several accumulation methods have been proposed using a fixed integration time or a fixed number of events.

For applications where objects continuously move, the known methods which deliver a series of snapshots may not represent those movements in a satisfying manner.

There is a need for more efficient methods to accumulate events, for example for applications where objects continuously move.

### Summary of the disclosure

The present disclosure overcomes one or more deficiencies of the prior art by proposing a method for elaborating image frames using an event-based vision sensor (PM) which comprises a plurality of pixels and is configured to output a stream of change events (ES), wherein each change event corresponds to a change in brightness detected by one pixel and comprises a time stamp, a pixel address, and a parameter describing a sign of said brightness change, wherein a first image frame and a second image frame are elaborated according to appended claim 1.

In contrast to some methods of the prior art, there is an overlapping period of time between the first and the second frame.

The inventors of the present invention have observed that by using this overlapping period of time, there are fewer differences in the events observed between the two time windows. Consequently, the precision of a subsequently used computer vision algorithm is improved when two images elaborated with the two time windows are applied to this algorithm.

In fact, this facilitates detecting a fast moving object in the two frames when tracking objects.

It should be noted that the two time windows may also be called sliding windows and that these sliding windows are offset in a manner which makes them overlap.

Preferably, the change events from the stream appear first in the first time window before appearing in the second time window.

It should also be noted that by using the time windows and the buffers, the image frames are continuously updated whenever there is a new change event entering the corresponding time window. This also differs from the methods of the prior art wherein image frame are formed, for example, after a certain duration has expired/after a number of events are detected. The invention is not limited to elaborating two image frames and may also be applied to obtaining more than two image frames, wherein there is an overlapping period of time for at least two of the time windows.

According to a particular embodiment, the first length and the second length are measured in units of time or in numbers of change events.

Thus, the lengths of the first and of the second time window can be expressed in in seconds (in most applications milliseconds) or in number of change events (which allows the duration of the time window to change). This is also the case for the first instant and the second instant which can both be measured from the present time using duration (seconds, milliseconds) or number of events.

According to a particular embodiment, the first time window and the second time window are overlapping for a length measured in units of time or in numbers of change events.

According to a particular embodiment, when a new event is observed in a time window and is accumulated in a buffer, the oldest event in the buffer is removed.

The buffer may have a first-in-first-out structure.

According to a particular embodiment, elaborating an image frame comprises, for every pixel of the image frame:
adding a given value to the pixel value when a change event is added to the buffer (the first one for the first image frame/the second one for the second image frame) for this pixel and subtracting this given value when the change event is removed from the buffer, or
adding a first given value to the pixel value when a change event is added to the buffer (the first one for the first image frame/the second one for the second image frame) for this pixel if the event has a parameter indicating an increase of brightness and subtracting this given value when the change event is removed from the buffer, and adding a second given value to the pixel value when a change event is added to the buffer if the event has a parameter indicating a decrease of brightness and subtracting this second given value when the change event is removed from the buffer.

According to the invention, elaborating an image frame comprises, for every pixel of the image frame,
adding, to the pixel value, a given value affected by a decay time coefficient (a coefficient having a value which decreases over time).

According to the invention, the method comprises performing a computer vision processing on the two image frames.

By way of example, the computer vision processing on the two image frames can comprise performing a comparison of the two image frames or of portions of the two image frames. It should be noted that this make this embodiment suitable for computer vision processing methods which are usually based on consecutive frame comparisons, even if the two time windows overlap here.

This comparison is more effective than in the methods according to the prior art.

It should be noted that this computer vision processing can be performed at any instant on the two continuously updated image frames. The person skilled in the art will determine, according to the application (which may indicate the speed of the objects which may be observed), when (typically at which frequency) should this processing be performed, so as to detect objects on the two frames while limiting the computational burden.

According to the invention, the computer vision processing comprises using a patch-matching processing.

According to the invention, the patch-matching processing is used to compute optical flow.

By way of example, the patch-matching processing is used to compute optical flow can be the Lucas-Kanade method (Simon Baker and Iain Matthews. "Lucas-kanade 20 years on: A unifying framework". International journal of computer vision, 56(3):221-255, 2004.) or the Horn-Schunck method (Berthold KP Horn and Brian G Schunck. "Determining optical flow". In Techniques and Applications of Image Understanding, volume 281, pages 319-331. International Society for Optics and Photonics, 1981.).

The invention also provides a system for elaborating image frames, the system including an event-based vision sensor (PM) which comprises a plurality of pixels and is configured to output a stream of change events (ES), wherein each change event corresponds to a change in brightness detected by one pixel and comprises a time stamp, a pixel address, and a parameter describing a sign of said brightness change,
the system comprising a processor configured to elaborate a first image frame and a second image frame as specified in appended claim 1.

This system may be configured to perform any embodiment of the above defined method.

By way of example, this system can be a computer system.

The invention also provides a vehicle including this system.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

### Brief description of the drawings

How the present disclosure may be put into effect will now be described by way of example with reference to the appended drawings, in which:
- figure 1 is a graphical representation of a method according to an example,
- figure 2 is a schematic representation of patch-matching without overlapping periods,
- figure 3 is a schematic representation of patch-matching with overlapping periods, and
- figure 4 is a vehicle according to an example.

### Description of the embodiments

An exemplary method for elaborating two image frames using an event-based vision sensor will now be described.

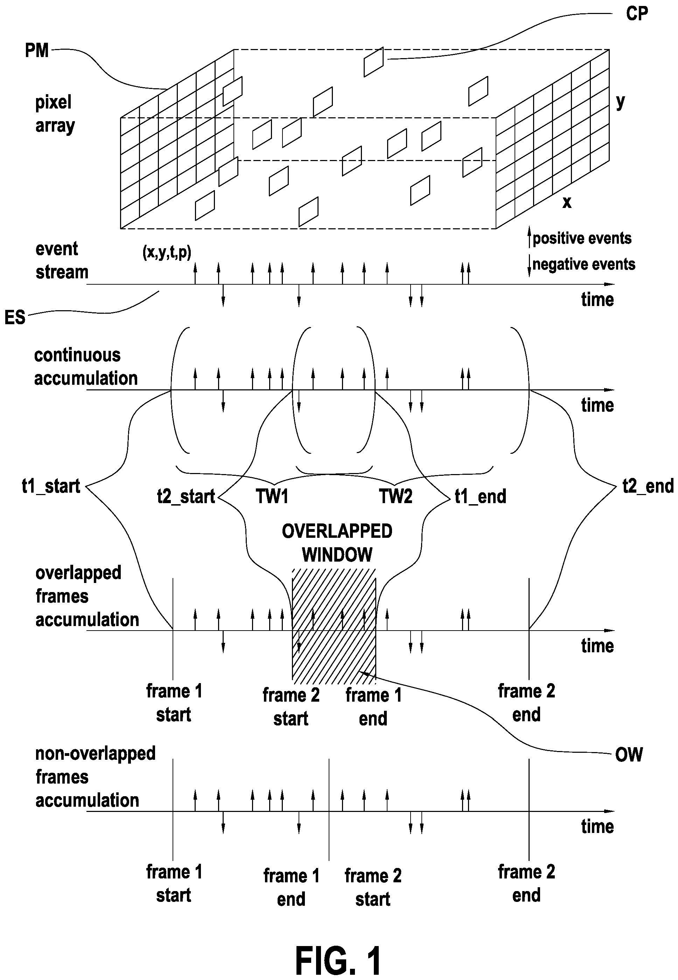

On figure 1, a pixel matrix PM of an event-based vision sensor is shown and the activation in time (the detection of a change of brightness above or below a given threshold) of given pixels of this matrix is represented using rectangles CP spread at given positions along the x-y plane (of the pixel matrix PM) and along the direction orthogonal to the pixel matrix to represent when the change event is detected/when the pixel is activated.

An event stream ES is obtained from these change events corresponding to a change in brightness detected by one pixel. In the event stream ES, each event comprises a time stamp (illustrated by its position in the stream), a pixel address (the x-y position), and a parameter describing a sign of said brightness change represented by an arrow pointing upwards for increases of brightness (positive event) and downwards for decreases of brightness (negative event).

On the figure, the event stream ES is shown at a given instant, but as time passes, additional events may appear on the right side of the represented event stream.

A change event can be expressed using 4 parameters: (x, y, t, p), wherein x and y indicate the pixel position, t the timestamp, and p the polarity (positive or negative event).

Elaborating image frames will be done by means of two time windows having a position which is fixed with respect to the present time (they are sliding windows). On the figure, two time windows TW1 and TW2 have been represented. The first time window TW1 starts at time t1_start and ends at time t1_end. The first time window has a duration expressed in units of time (seconds, milliseconds), but this window may also have a length defined in number of events that it can include, measured from the first event appearing in the stream and passing through the time window.

The second time window TW2 start at time t2_start and ends at time t2_end. The second time window has a duration expressed in units of time (seconds, milliseconds), but this window may also have a length defined in number of events that it can include, measured from the first event appearing in the stream and passing through the time window.

The starting time t2_start of the second time window is chosen so that the two time windows are overlapping (if the length of the windows is in number of events, the overlap can start after a given number of events have been observed in the first window so that the overlap contains another given number of events)On the figure, an overlapped window OW is illustrated.

A continuous accumulation process can then be carried out in which events which appear in the first time window TW1 are accumulated in a first buffer, for example having a first-in-first-out structure: when a new event is added, the oldest event is removed. The buffer can store the four parameters of each event (x, y, t, p). Other structures are possible.

Then, from this buffer, it is possible to elaborate a first image frame. Elaborating this image frame can be performed at any time, for example every time an event is accumulated, or at any instant, using the buffer in the state in which it is at this instant.

In this image, each pixel value is obtained by:
adding a given value (typically 1) to the pixel value when a change event is added to the buffer (the first one for the first image frame/the second one for the second image frame) for this pixel and subtracting this given value when the change event is removed from the buffer (in this alternative, the polarity is not taken into account), or
adding a first given value (typically 1) to the pixel value when a change event is added to the buffer (the first one for the first image frame/the second one for the second image frame) for this pixel if the event has a parameter indicating an increase of brightness and subtracting this given value when the change event is removed from the buffer, and adding a second given value (typically -1) to the pixel value when a change event is added to the buffer if the event has a parameter indicating a decrease of brightness and subtracting this second given value when the change event is removed from the buffer (in this alternative, the polarity is taken into account), or
adding, to the pixel value, a given value (typically 1) affected by a decay time coefficient (a coefficient having a value which decreases over time).

In a similar manner, a continuous accumulation process can be carried out in which events which appear in the second time window TW2 are accumulated in a second buffer, for example also having a first-in-first-out structure: when a new event is added, the oldest event is removed. The buffer can store the four parameters of each event (x, y, t, p). Other structures are possible.

Then, from this buffer, it is possible to elaborate a second image frame. Elaborating this image frame can be performed at any time, for example every time an event is accumulated, or at any instant, using the buffer in the state in which it is at this instant. Elaborating the second image frame can be done using the same method as elaborating the first image frame.

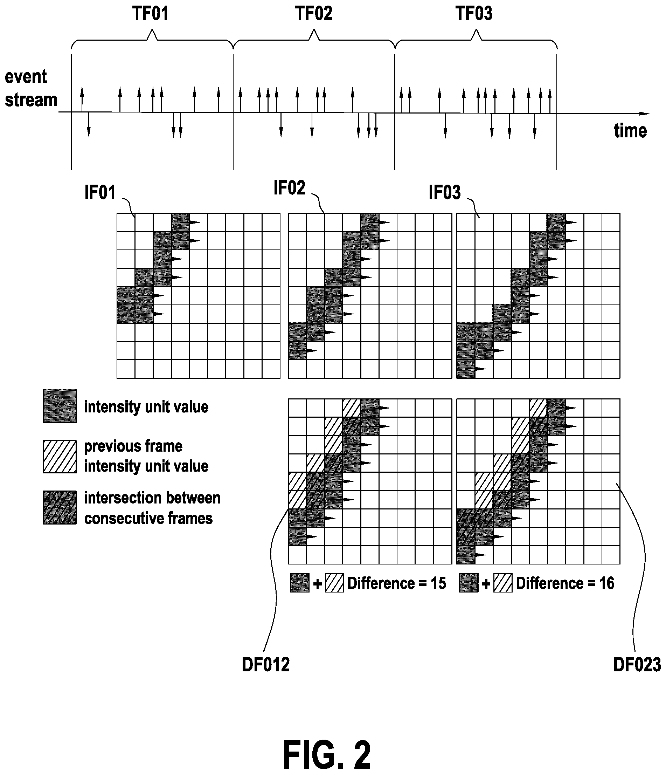

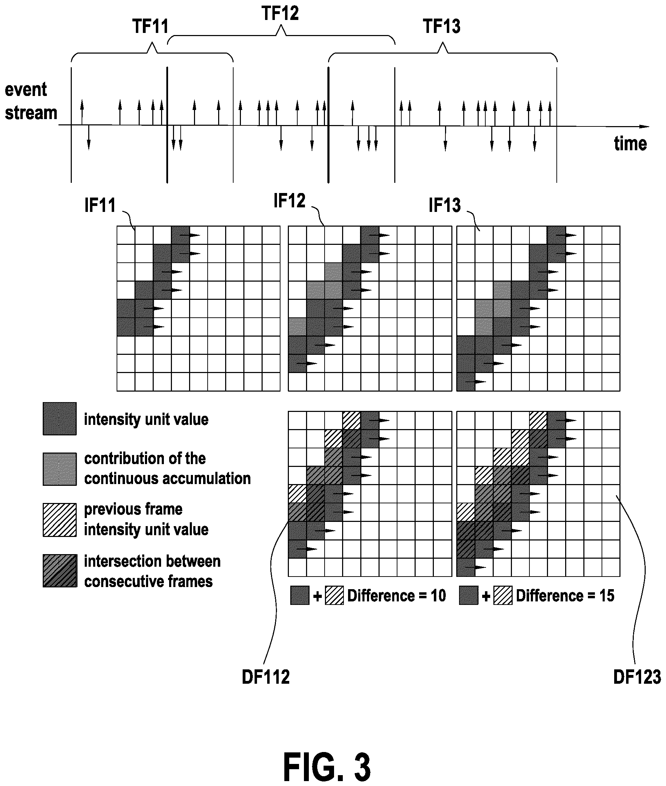

On the figure, another case without any overlapping between the time windows is also shown at the bottom of the figure: it appears that while the two time windows will cover a same period (from t1_start to t2_end), the two time windows are more different in terms of events included when there is no overlapping window. Consequently and as will be easier to understand on figures 2 and 3, fast moving objects may be harder to track without the overlapping window.

Figure 2 is a schematic representation of the implementation of a computer vision processing on bitmap frames obtained using time windows that have no overlapping windows. More precisely, three consecutive non-overlapping time windows TF01, TF02 and TF03 are shown on the figure (three buffers are also used). These are obtained by using the x and y coordinate of each change event and adding a color to each event stored in a buffer at a given instant, regardless of the polarity of the events.

Thus, an image frame IF01 corresponding to the time window TF01 is obtained, an image frame IF02 corresponding to the time window TF02 is obtained, and an image frame IF03 corresponding to the time window TF03 is obtained. In the illustrated example, IF01 to IF03 are image frames, but they could also be patches or portions of larger image frames.

When two consecutive images are compared, as is usually done in computer vision processing methods using patch-matching (to compute optical flow), it is possible to use metrics such as the SAD (Sum of Absolute Differences). Under this metric, two identical patches or frame have a difference of 0, and a low SAD value indicates a high similarity.

A graphical representation of the difference between image frame IF01 and image frame IF02 is shown as DF012 and a graphical representation of the difference between image frame IF02 and image frame IF03 is shown as DF023. In the two difference images, the hatched portions indicate the previous frame and the greyed portions indicate the subsequent frame. The difference is calculated using the portions which are not both greyed and hatched. For example, for the difference DF012, the difference is 15. For difference DF023, the difference is 16.

Referring now to figure 3, we will now describe an example in which there are overlapping windows between three time windows TF11, TF12 and TF13.

An image frame IF11 corresponding to the time window TF11 is obtained, an image frame IF12 corresponding to the time window TF12 is obtained, and an image frame IF13 corresponding to the time window TF13 is obtained. In the illustrated example, IF11 to IF13 are image frames, but they could also be patches or portions of larger image frames.

The change events which appear in two frames sharing an overlapping window are shown with a different shade of grey on the figure.

While the event stream used for the examples of figures 2 and 3 is the same, it appears that the differences shown in DF112 and DF123 are respectively of 10 and 15: there are fewer differences between images obtained from successive overlapping time windows than from successive non-overlapping time windows.

It has been observed that the method of figures 1 and 3, which benefit from overlapping windows, provide improvements for continuously moving objects observed by the sensor, as the overlapping window increases the number of accumulated events compared to non-overlapping consecutive frames.

The information carried within the overlapping window provides a more refined gradient descent in the case of fast moving objects observed by the sensor, this gradient descent being used when computing the optical flow in a known manner.

Non-overlapping time windows produce images with reduced shared information, which is detrimental for a search performed during a patch comparison.

The accumulation method described in reference to figures 1 and 3 is also useful for image reconstruction from the event stream (for example for upsampling or deblurring). The conversion of events into image frames can be useful to interface the event-based sensor with conventional frame-based algorithms.

In fact, the present method can provide image frames having a frame period as low as 10 milliseconds without any loss of information because of the use of overlapping windows.

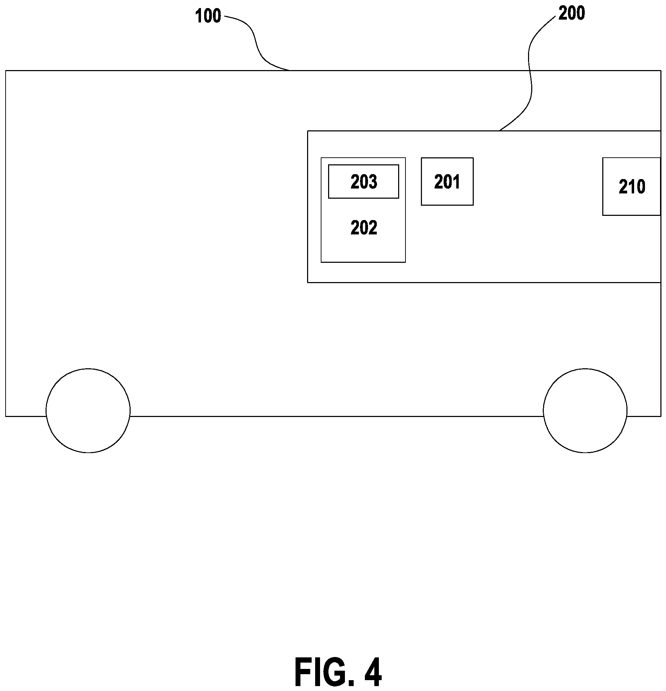

Figure 4 is a schematic representation of a vehicle 100 according to an example. This vehicle is equipped with a system 200 configured to perform the accumulation method described in reference to figures 1 and 3. To this end, the system is equipped with an even-based sensor 210 and a processor 201 able to execute computer program instructions stored in a non-volatile memory 202.

In the illustrated example, computer program instructions 203 are stored in the nonvolatile memory 202 so that the processor can execute these instructions to be configured to elaborate a first image frame and a second image frame, the first image frame being elaborated using change events accumulated in a first buffer accumulating the change events observed in a first time window having a first length and configured to observe the stream of change events from a relative first instant measured from the present time,
the second image frame being elaborated using change events accumulated in a second buffer accumulating the change events observed in a second time window having a second length and configured to observe the stream of change events from a relative second instant measured from the present time,
and the first time window and the second time window are overlapping.

## Claims

1. A method for elaborating image frames using an event-based vision sensor (PM) which comprises a plurality of pixels and is configured to output a stream of change events (ES), wherein each change event corresponds to a change in brightness detected by one pixel and comprises a time stamp, a pixel address, and a parameter describing a sign of said brightness change,
wherein a first image frame and a second image frame are elaborated,
the first image frame being elaborated using change events accumulated in a first buffer accumulating the change events observed in a first time-window having a first length and configured to observe the stream of change events from a relative first instant measured from the present time and for every pixel of the first image, when a change event is added to the first buffer for this pixel, by adding to the pixel value a given value affected by a decay time coefficient,
the second image frame being elaborated using change events accumulated in a second buffer accumulating the change events observed in a second time-window having a second length and configured to observe the stream of change events from a relative second instant measured from the present time and for every pixel of the second image, when a change event is added to the second buffer for this pixel, by adding to the pixel value a given value affected by a decay time coefficient,
and wherein the first time-window and the second time-window are overlapping increasing shared information between the first image frame and second image frame,
the method comprising performing a computer vision processing on the two image frames, wherein the computer vision processing comprises using a patch-matching processing, and wherein the patch-matching processing is used to compute optical flow.

2. The method according to claim 1, wherein the first length and the second length are measured in units of time or in numbers of change events.

3. The method according to claim 1 or 2, wherein the first time-window and the second time-window are overlapping for a length measured in units of time or in numbers of change events.

4. The method according to any one of claims 1 to 3, wherein when a new event is observed in a time-window and is accumulated in a buffer, the oldest event in the buffer is removed.

5. A system for elaborating image frames, the system including an event-based vision sensor (PM) which comprises a plurality of pixels and is configured to output a stream of change events (ES), wherein each change event corresponds to a change in brightness detected by one pixel and comprises a time stamp, a pixel address, and a parameter describing a sign of said brightness change,
the system comprising a processor configured to elaborate a first image frame and a second image frame,
the first image frame being elaborated using change events accumulated in a first buffer accumulating the change events observed in a first time-window having a first length and configured to observe the stream of change events from a relative first instant measured from the present time and for every pixel of the first image, when a change event is added to the first buffer for this pixel, by adding to the pixel value a given value affected by a decay time coefficient,
the second image frame being elaborated using change events accumulated in a second buffer accumulating the change events observed in a second time-window having a second length and configured to observe the stream of change events from a relative second instant measured from the present time and for every pixel of the second image, when a change event is added to the second buffer for this pixel, by adding to the pixel value a given value affected by a decay time coefficient,
and wherein the first time-window and the second time-window are overlapping increasing shared information between the first image frame and second image frame,
the system being configured to perform a computer vision processing on the two image frames, wherein the computer vision processing comprises using a patch-matching processing, and wherein the patch-matching processing is used to compute optical flow.

6. A vehicle including the system of claim 5.

7. A computer program including instructions for executing the steps of a method according to any one of claims 1 to 4 when said program is executed by a computer.

8. A recording medium readable by a computer and having recorded thereon a computer program including instructions for executing the steps of a method according to any one of claims 1 to 4.

## Patentansprüche

1. Verfahren zum Erstellen von Bildframes unter Verwendung eines ereignisbasierten Vision-Sensors (PM), der eine Vielzahl von Pixeln umfasst und konfiguriert ist, um einen Strom von Änderungsereignissen (ES) auszugeben, wobei jedes Änderungsereignis einer von einem Pixel erfassten Helligkeitsänderung entspricht und einen Zeitstempel, eine Pixeladresse und einen Parameter, der ein Vorzeichen der Helligkeitsänderung beschreibt, umfasst,
wobei ein erstes Bildframe und ein zweites Bildframe erstellt werden,
wobei das erste Bildframe unter Verwendung von Änderungsereignissen verarbeitet wird, die in einem ersten Zwischenspeicher akkumuliert werden, der die in einem ersten Zeitfenster mit einer ersten Länge beobachteten Änderungsereignisse akkumuliert und konfiguriert ist, um den Strom von Änderungsereignissen von einem relativen ersten Zeitpunkt aus zu beobachten, der von der gegenwärtigen Zeit aus gemessen wird, und für jedes Pixel des ersten Bildframes, wenn ein Änderungsereignis zu dem ersten Zwischenspeicher für dieses Pixel hinzugefügt wird, indem zu dem Pixelwert ein gegebener Wert addiert wird, der von einem Abklingzeitkoeffizienten beeinflusst wird,
wobei das zweite Bildframe unter Verwendung von Änderungsereignissen verarbeitet wird, die in einem zweiten Zwischenspeicher akkumuliert werden, der die in einem zweiten Zeitfenster mit einer zweiten Länge beobachteten Änderungsereignisse akkumuliert und konfiguriert ist, um den Strom von Änderungsereignissen von einem relativen zweiten Zeitpunkt aus zu beobachten, der von der gegenwärtigen Zeit aus gemessen wird, und für jedes Pixel des zweiten Bildframes, wenn ein Änderungsereignis zu dem zweiten Zwischenspeicher für dieses Pixel hinzugefügt wird, indem zu dem Pixelwert ein gegebener Wert addiert wird, der von einem Abklingzeitkoeffizienten beeinflusst wird,
und wobei das erste Zeitfenster und das zweite Zeitfenster sich überschneiden und die gemeinsame Information zwischen dem ersten Bildframe und dem zweiten Bildframe erhöhen,
das Verfahren umfassend ein Durchführen ein Computervision-Verarbeiten an den zwei Bildframes umfasst, wobei das Computervision-Verarbeiten ein Verwenden ein Patch-Matching-Verarbeiten umfasst, und wobei das Patch-Matching-Verarbeiten verwendet wird, um einen optischen Fluss zu berechnen.

2. Verfahren nach Anspruch 1, wobei die erste Länge und die zweite Länge in Zeiteinheiten oder in der Anzahl von Änderungsereignissen gemessen werden.

3. Verfahren nach Anspruch 1 oder 2, wobei sich das erste Zeitfenster und das zweite Zeitfenster über Länge überlappen, die in Zeiteinheiten oder in der Anzahl von Änderungsereignissen gemessen wird.

4. Verfahren nach einem der Ansprüche 1 bis 3, wobei, wenn ein neues Ereignis in einem Zeitfenster beobachtet und in einem Zwischenspeicher akkumuliert wird, das älteste Ereignis in dem Zwischenspeicher entfernt wird.

5. System zum Erstellen von Bildframes, wobei das System einen ereignisbasierten Vision-Sensor (PM) beinhaltet, der eine Vielzahl von Pixeln umfasst und konfiguriert ist, um einen Strom von Änderungsereignissen (ES) auszugeben, wobei jedes Änderungsereignis einer von einem Pixel erfassten Helligkeitsänderung entspricht und einen Zeitstempel, eine Pixeladresse und einen Parameter, der ein Vorzeichen der Helligkeitsänderung beschreibt, umfasst,
das System umfassend einen Prozessor, der konfiguriert ist, um ein erstes Bildframe und ein zweites Bildframe zu erstellen,
wobei das erste Bildframe unter Verwendung von Änderungsereignissen verarbeitet wird, die in einem ersten Zwischenspeicher akkumuliert werden, der die in einem ersten Zeitfenster mit einer ersten Länge beobachteten Änderungsereignisse akkumuliert und konfiguriert ist, um den Strom von Änderungsereignissen von einem relativen ersten Zeitpunkt aus zu beobachten, der von der gegenwärtigen Zeit aus gemessen wird, und für jedes Pixel des ersten Bildframes, wenn ein Änderungsereignis zu dem ersten Zwischenspeicher für dieses Pixel hinzugefügt wird, indem zu dem Pixelwert ein gegebener Wert addiert wird, der von einem Abklingzeitkoeffizienten beeinflusst wird,
wobei das zweite Bildframe unter Verwendung von Änderungsereignissen verarbeitet wird, die in einem zweiten Zwischenspeicher akkumuliert werden, der die in einem zweiten Zeitfenster mit einer zweiten Länge beobachteten Änderungsereignisse akkumuliert und konfiguriert ist, um den Strom von Änderungsereignissen von einem relativen zweiten Zeitpunkt aus zu beobachten, der von der gegenwärtigen Zeit aus gemessen wird, und für jedes Pixel des zweiten Bildframes, wenn ein Änderungsereignis zu dem zweiten Zwischenspeicher für dieses Pixel hinzugefügt wird, indem zu dem Pixelwert ein gegebener Wert addiert wird, der von einem Abklingzeitkoeffizienten beeinflusst wird,
und wobei das erste Zeitfenster und das zweite Zeitfenster sich überschneiden und die gemeinsame Information zwischen dem ersten Bildframe und dem zweiten Bildframe erhöhen,
das System konfiguriert ist, um ein Computervision-Verarbeiten an den zwei Bildframes durchzuführen, wobei das Computervision-Verarbeiten ein Verwenden ein Patch-Matching-Verarbeiten umfasst, und wobei das Patch-Matching-Verarbeiten verwendet wird, um einen optischen Fluss zu berechnen.

6. Fahrzeug, das das System nach Anspruch 5 beinhaltet.

7. Computerprogramm, das Anweisungen zum Ausführen der Schritte eines Verfahrens nach einem der Ansprüche 1 bis 4 beinhaltet, wenn das Programm von einem Computer ausgeführt wird.

8. Aufzeichnungsmedium, das von einem Computer lesbar ist und auf dem ein Computerprogramm aufgezeichnet ist, das Anweisungen zum Ausführen der Schritte eines Verfahrens nach einem der Ansprüche 1 bis 4 beinhaltet.

## Revendications

1. Procédé d'élaboration de trames d'image à l'aide d'un capteur de vision basé sur des événements (PM) qui comprend une pluralité de pixels et est configuré pour délivrer en sortie un flux d'événements de changement (ES), chaque événement de changement correspondant à un changement de luminosité détecté par un pixel et comprenant un horodatage, une adresse de pixel et un paramètre décrivant un signe dudit changement de luminosité,
dans lequel une première trame d'image et une deuxième trame d'image sont élaborées,
la première trame d'image étant élaborée à l'aide d'événements de changement accumulés dans une première mémoire-tampon accumulant les événements de changement observés dans un premier intervalle de temps ayant une première durée et configuré pour observer le flux d'événements de changement à partir d'un premier instant relatif mesuré à partir du temps actuel et pour chaque pixel de la première image, lorsqu'un événement de changement est ajouté à la première mémoire-tampon pour ce pixel, en ajoutant à la valeur du pixel une valeur donnée affectée par un coefficient de temps de décroissance,
la deuxième trame d'image étant élaborée à l'aide d'événements de changement accumulés dans une deuxième mémoire-tampon accumulant les événements de changement observés dans un deuxième intervalle de temps ayant une deuxième durée et configuré pour observer le flux d'événements de changement à partir d'un deuxième instant relatif mesuré à partir du temps actuel et pour chaque pixel de la deuxième image, lorsqu'un événement de changement est ajouté à la deuxième mémoire-tampon pour ce pixel, en ajoutant à la valeur du pixel une valeur donnée affectée par un coefficient de temps de décroissance,
et dans lequel le premier intervalle de temps et le deuxième intervalle de temps se chevauchent, augmentant les informations partagées entre la première trame d'image et la deuxième trame d'image,
le procédé comprenant la réalisation d'un traitement de vision informatique sur les deux trames d'image, le traitement de vision informatique comprenant l'utilisation d'un traitement de correspondance de patch, et dans lequel le traitement de correspondance de patch est utilisé pour calculer un flux optique.

2. Procédé selon la revendication 1, dans lequel la première durée et la deuxième durée sont mesurées en unités de temps ou en nombres d'événements de changement.

3. Procédé selon la revendication 1 ou 2, dans lequel le premier intervalle de temps et le deuxième intervalle de temps se chevauchent sur une durée mesurée en unités de temps ou en nombres d'événements de changement.

4. Procédé selon l'une quelconque des revendications 1 à 3, dans lequel, lorsqu'un nouvel événement est observé dans un intervalle de temps et est accumulé dans une mémoire-tampon, l'événement le plus ancien dans la mémoire-tampon est supprimé.

5. Système d'élaboration de trames d'image, le système comprenant un capteur de vision basé sur des événements (PM) qui comprend une pluralité de pixels et est configuré pour délivrer en sortie un flux d'événements de changement (ES), chaque événement de changement correspondant à un changement de luminosité détecté par un pixel et comprenant un horodatage, une adresse de pixel et un paramètre décrivant un signe dudit changement de luminosité,
le système comprenant un processeur configuré pour élaborer une première trame d'image et une deuxième trame d'image,
la première trame d'image étant élaborée à l'aide d'événements de changement accumulés dans une première mémoire-tampon accumulant les événements de changement observés dans un premier intervalle de temps ayant une première durée et configuré pour observer le flux d'événements de changement à partir d'un premier instant relatif mesuré à partir du temps actuel et pour chaque pixel de la première image, lorsqu'un événement de changement est ajouté à la première mémoire-tampon pour ce pixel, en ajoutant à la valeur du pixel une valeur donnée affectée par un coefficient de temps de décroissance,
la deuxième trame d'image étant élaborée à l'aide d'événements de changement accumulés dans une deuxième mémoire-tampon accumulant les événements de changement observés dans un deuxième intervalle de temps ayant une deuxième durée et configuré pour observer le flux d'événements de changement à partir d'un deuxième instant relatif mesuré à partir du temps actuel et pour chaque pixel de la deuxième image, lorsqu'un événement de changement est ajouté à la deuxième mémoire-tampon pour ce pixel, en ajoutant à la valeur du pixel une valeur donnée affectée par un coefficient de temps de décroissance,
et dans lequel le premier intervalle de temps et le deuxième intervalle de temps se chevauchent, augmentant les informations partagées entre la première trame d'image et la deuxième trame d'image,
le système étant configuré pour réaliser un traitement de vision informatique sur les deux trames d'image, le traitement de vision informatique comprenant l'utilisation d'un traitement de correspondance de patch, et dans lequel le traitement de correspondance de patch est utilisé pour calculer le flux optique.

6. Véhicule comprenant le système selon la revendication 5.

7. Programme informatique comprenant des instructions pour exécuter les étapes d'un procédé selon l'une quelconque des revendications 1 à 4 lorsque ledit programme est exécuté par un ordinateur.

8. Support d'enregistrement lisible par un ordinateur et sur lequel est enregistré un programme informatique comprenant des instructions pour exécuter les étapes d'un procédé selon l'une quelconque des revendications 1 à 4.
